# EUROPÄISCHE PATENTANMELDUNG

(11) **EP 1 607 738 A1**
(43) Veröffentlichungstag der Anmeldung: **21.12.2005**
(21) Anmeldenummer: 05104644.9
(22) Anmeldetag: 31.05.2005
(51) Int. Cl.: G01N 21/88, H01L 21/66, G06T 5/50, G06T 5/00, G06T 7/00

(54) **Verfahren und System zur Inspektion eines Wafers**

(30) Priorität: 16.06.2004 DE 102004029012
(71) Anmelder: Leica Microsystems Semiconductor GmbH, 35578 Wetzlar (DE)
(72) Erfinder: Backhauss, Henning, 35578, Wetzlar (DE); Kreh, Albert, 35606, Solms (DE)
(74) Vertreter: Reichert, Werner Franz

(57) **Zusammenfassung**

Die Erfindung betrifft ein Verfahren und ein System zur Inspektion eines Wafers (2), insbesondere zur Untersuchung der Randentlackung, wobei ein optisches Bild des zu inspizierenden Bereichs mittels eines optischen Detektors (9) aufgenommen wird. Es wird vorgeschlagen, ein erstes optisches Bild (25) vor dem Aufbringen einer Schicht wie Fotoresist auf die Waferscheibe und ein zweites optisches Bild (26) nach dem teilweisen Entfernen dieser Schicht (Randentlackung) aufzunehmen, und den abgebildeten Bereich (23) der Waferoberfläche durch Vergleich (27) des ersten und des zweiten Bildes zu inspizieren. Hierdurch wird die Erkennbarkeit der zu untersuchenden Strukturen (29, 31) deutlich erhöht.

## Beschreibung

Die Erfindung betrifft ein Verfahren zur Inspektion eines Wafers, insbesondere zur Untersuchung der Randentlackung, wobei ein optisches Bild des zu inspizierenden Bereichs aufgenommen wird. Weiterhin betrifft die Erfindung ein entsprechendes System mit einem optischen Detektor zur Aufnahme eines optischen Bildes des zu inspizierenden Bereichs. Schließlich betrifft die Erfindung ein Computerprogramm und ein Computerprogrammprodukt zur Umsetzung des Inspektionsverfahrens.

In der Halbleiterfertigung werden Wafer mit Schichten wie Fotolack- und häufig auch Antireflexschichten beschichtet. Hierzu wird in der Regel eine vorbestimmte Menge der aufzubringenden Substanz auf die rotierende Waferscheibe aufgebracht, auf der sich die Substanz gleichmäßig verteilt. Im Randbereich des Wafers lagert sich bei diesem Verfahren etwas mehr Substanz (Fotolack) ab als in der Mitte des Wafers. Hierdurch entsteht eine im Englischen als "Edge Bead" bezeichnete Randwulst. Eine derartige Randwulst kann in den weiteren Fertigungsschritten des Wafers zum Abspringen von Teilen aus der Randwulst und damit zu Verunreinigungen von Fertigungsmaschinen sowie zur Entstehung von Defekten auf dem Wafer führen.

Um diese Auswirkungen zu vermeiden, wird eine Randentlackung (engl.: Edge Bead Removal = EBR) ausgeführt. Die Randentlackung kann nasschemisch und/oder optisch erfolgen. Zur nasschemischen Entfernung wird ein geeignetes Lösungsmittel auf den Rand des Wafers gespritzt, zur optischen Randentlackung wird der Rand gezielt belichtet und der belichtete Bereich anschließend im Entwicklungsprozess entfernt.

Fehler bei der Randentlackung können vom ungenauen Ausrichten der entsprechenden Entlackungsvorrichtungen relativ zum Wafer resultieren. Weitere Fehlerquellen liegen in der ungenauen Ausrichtung der Beleuchtungseinrichtung relativ zum Wafer bei der Belichtung des Fotolacks. Fehler bei der Randentlackung können in einer zu geringen oder zu großen Breite des entlackten Waferrandes oder zu einem exzentrischen Verlauf dieses Randes führen. Eine zu geringe Randentlackung kann zu Verunreinigungen bei der nachfolgenden Waferprozessierung führen, hingegen kann eine zu große Randentlackung zur Erhöhung des Ausschusses wegen Verringerung des nutzbaren Waferbereichs führen. In beiden Fällen wird die Produktivität des Fertigungsprozesses vermindert. Deshalb ist es notwendig, Aussagen über die Breite der Randentlackung treffen zu können. Hierzu ist es von Interesse, diese nach jedem Fertigungsschritt des Wafers, d.h. nach jedem Aufbringen einer Fotoresistschicht mit anschließender Randentlackung, zu inspizieren.

In der DE 102 32 781 A1 wird auf eine bekannte Einrichtung Bezug genommen, mittels der ein Wafer im Hellfeld beleuchtet und mit einer Kamera abgescannt wird. Die erhaltenen Bilder werden mittels Bildverarbeitung anschließend untersucht, um die Randentlackung sichtbar zu machen. Hierbei stellt sich heraus, dass die aufgenommenen Bilder je nach Prozessschritt im Randbereich des Wafers verschiedenste Ränder auf der Waferoberfläche zeigen, die aus verschiedenen Prozessschritten stammen. Die Ränder unterscheiden sich farblich bzw. im Grauwert voneinander, kreuzen und überschneiden sich zum Teil und ändern teilweise auch in ihrem Verlauf den Farb- bzw. Grauwert. Es gestaltet sich daher bislang als schwierig bis unmöglich, die Randentlackung mittels einer derartigen Bildverarbeitung automatisch zu detektieren.

Die DE 102 32 781 A1 schlägt daher ein System bestehend aus einer Auflichtbeleuchtungsquelle und einer Abbildungseinrichtung zur Inspektion einer Waferoberfläche vor, wobei die Beleuchtungseinrichtung um einen geeigneten Winkel derart aus der Hellfeldbeleuchtungs-Einstellung herausgedreht wird, dass eine Beobachtung der Waferoberfläche im Dunkelfeld erfolgt. Hierdurch lassen sich vorwiegend kleine Strukturen besonders gut inspizieren, die sich durch geringen Höhenunterschied gegenüber dem Untergrund auszeichnen.

Es hat sich jedoch bei dieser Inspektionsmethode als nachteilig ergeben, dass auch hier oftmals ein klar begrenzter Rand nicht sichtbar ist und Ränder aus vorangegangenen Prozessschritten die Erkennbarkeit der Randentlackung stark herabsetzen.

Aufgabe vorliegender Erfindung ist daher, ein Verfahren und ein System zur Inspektion eines Wafers, insbesondere zur Untersuchung der Randentlackung, anzugeben, wobei mittels eines optischen Detektors ein optisches Bild des zu inspizierenden Bereichs aufgenommen werden soll, und wobei die zu untersuchenden Strukturen deutlich zu Tage treten sollen.

Diese Aufgabe wird erfindungsgemäß dadurch gelöst, dass ein erstes optisches Bild vor dem Aufbringen einer Schicht auf die Waferscheibe und ein zweites optisches Bild nach dem zumindest teilweisen Entfernen dieser Schicht aufgenommen wird, und dass der abgebildete Bereich der Waferoberfläche durch Vergleich des ersten und des zweiten Bildes inspiziert wird. Bei der aufzubringenden Schicht handelt es sich in der Praxis in der Regel um eine Fotoresistschicht (durch Aufbringen von Fotolack) oder um eine Antireflexionsschicht. Ohne Einschränkung der Allgemeinheit wird im Folgenden überwiegend von einer Fotoresistschicht die Rede sein, an der die eingangs geschilderte Randentlackung ausgeführt wird. Die Erfindung ist jedoch auch für andersartige Schichten, die zumindest teilweise entfernt werden, wie Antireflexionsschichten, gültig.

Der erfindungsgemäße Vergleich des ersten und des zweiten Bildes macht es möglich, Merkmale vorhergegangener Prozesse zu eliminieren. Hierdurch können sich Strukturen, die aus vorangegangenen Prozessschritten stammen, nicht mehr störend auswirken. Der Vergleich der beiden Bilder erfolgt mittels geeigneter Bildverarbeitung, die den Unterschied zwischen den Bildern herausarbeitet. Dies kann z. B. in einfacher Weise durch Erstellung eines Differenzbildes geschehen.

Beim Beispiel der Fotoresistschicht mit anschließender Randentlackung wird beim erfindungsgemäßen Verfahren vor dem Aufbringen der Fotoresistschicht (also vor Aufbringen des Lacktropfens auf die rotierende Waferscheibe) das erste optische Bild aufgenommen. Dieses zeigt dann den Ist-Zustand der Waferoberfläche, wie er sich aufgrund der vorangegangenen Prozessschritte ergibt. Je nach Art der Randentlackung (nasschemisch und/oder optisch) wird das zweite optische Bild unmittelbar nach der Randentlackung oder erst nach dem Entwickeln der Fotoresistschicht aufgenommen. Im letzteren Fall zeigt das zweite Bild das durch die Entwicklung des Fotolacks entstandene Relief einschließlich der Randentlackung. In dem zweiten Bild sind auch die im ersten Bild vorhandenen Strukturen (zumindest zum Teil) sichtbar. Durch Vergleich beider Bilder lassen sich somit diese übrig gebliebenen Strukturen aus den vorangehenden Prozessschritten eliminieren. Im einfachsten Falle wird hierzu ein Differenzbild erstellt, jedoch kann auch eine gewichtete Differenzbildung erfolgen oder andere bekannte Bildverarbeitungsmethoden, um die Unterschiede der beiden Bilder maximal erkennbar zu machen.

Es hat sich gezeigt, dass mit dem erfindungsgemäßen Verfahren die Randentlackung, d.h. also der Abstand der Lackentfernung vom Waferrand, besser als bisher bestimmt werden kann. Aus dem Vergleich der beiden Bilder können mittels Bildverarbeitung in kurzer Zeit die Randbreite und eventuell weitere interessierende Größen, wie Toleranz, Maß der Exzentrizität etc., bestimmt werden. Es ist sinnvoll, nur das Ergebnisbild (beispielsweise Differenzbild) zu speichern oder, um die Datenmenge weiter zu verringern, nur die bestimmten Ergebniswerte. Beispielsweise kann auch vorgesehen sein, in schwer auszuwertenden Problemfällen beide Bilder abzuspeichern, um eine spätere visuelle Nachuntersuchung zu ermöglichen.

Das erfindungsgemäße Verfahren kann mit den bekannten Beleuchtungsarten operieren, wobei die optischen Bilder dann im Hellfeld, im Dunkelfeld oder im kombinierten Hell- und Dunkelfeld aufgenommen werden.

Der zu inspizierende Bereich kann von einem optischen Detektor (Zeilen- oder Matrixdetektor) gescannt werden. Auch One-Shots (Aufnahme des gesamten Wafers in einem Bild) sind zweckdienlich. Die optische Auflösung muss hierbei der erwünschten Auflösung der zu detektierenden Bereiche (der Breite der Randentlackung) angepasst sein.

Im Falle der Inspektion der Randentlackung erweist sich eine Kamerazeile (z. B. CCD oder CMOS) als vorteilhaft, die Bilder des Randbereichs des Wafers aufnimmt, der unter der Kamerazeile rotiert. Bildfrequenz der Kamerazeile und Drehfrequenz des Wafers müssen geeignet aufeinander abgestimmt werden. Bei einer derartigen Anordnung lässt sich die einzuhaltende Toleranz der Randentlackungsbreite mit ausreichender Auflösung bestimmen.

Für das erfindungsgemäße Verfahren eignen sich verschiedene Kombinationen von Beleuchtungs- und Detektionsarten. Der zu inspizierende Bereich (oder auch der gesamte Wafer) kann monochrom oder polychrom beleuchtet werden. Der optische Detektor kann eine Monochrom- oder Farbkamera darstellen. Hierbei setzt eine polychrome Beleuchtung nicht zwingend eine Farbkamera voraus, vielmehr kann auch eine Monochromkamera zum Einsatz kommen, die zumindest für einen Bereich der polychromen Beleuchtung spektral empfindlich ist. Im Allgemeinen kann mit einer Auflicht-Hellfeldbeleuchtung gearbeitet werden.

Da bei einer Auflicht-Dunkelfeldbeleuchtung die Anzahl abgebildeter Strukturen im Vergleich zur entsprechenden Hellfeldbeleuchtung gering ist, ist der Einsatz einer solchen Beleuchtung sorgfältig zu prüfen. Im geeigneten Fall bleiben nach Auswertung der Bilder nur noch die zu untersuchenden Strukturen sichtbar. Bei einer Hellfeldbeleuchtung könnte weiterhin eine Dunkelfeldbeleuchtung auch zur Hervorhebung besonderer Eigenschaften ergänzt werden.

Prinzipiell ist für das erfindungsgemäße Verfahren eine aus der DE 102 32 781 A1 bekannte Vorrichtung nutzbar. Zu den Eigenschaften und der Arbeitsweise einer solchen Vorrichtung wird hiermit explizit auf die genannte Offenlegungsschrift verwiesen.

Erfindungsgemäß ist ein Waferinspektionssystem zur Inspektion eines Wafers, insbesondere zur Untersuchung der Randentlackung, mit einem optischen Detektor zur Aufnahme eines optischen Bildes des zu inspizierenden Bereichs und mit einer Datenauslese-Einrichtung zur Auslese der vom optischen Detektor gelieferten Bilddaten mit einer mit der Datenauslese-Einrichtung in Verbindung stehenden Rechnereinheit zum Vergleich von aufgenommenen Bildern des zu inspizierenden Bereichs ausgestattet. Es ist ausreichend und vorteilhaft, wenn das System einen einzigen optischen Detektor aufweist, der vor dem Aufbringen einer Schicht auf die Waferscheibe ein erstes Bild und nach dem zumindest teilweisen Entfernen dieser Schicht ein zweites Bild aufnimmt. Die Rechnereinheit vergleicht die aufgenommenen Bilder und ermöglicht damit die erfindungsgemäße Inspektion des abgebildeten Bereichs der Waferoberfläche.

Durch die Verwendung eines einzigen optischen Detektors ist sichergestellt, dass das erste und das zweite Bild ohne Kalibrierungsprobleme aufgenommen werden können. Das erfindungsgemäße System ist zweckmäßig in den Herstellungsprozess des Wafers integrierbar, so dass der prozessierte Wafer das Inspektionssystem einmal vor Aufbringen beispielsweise der Fotoresistschicht und anschließend beispielsweise nach Entwickeln des Fotolacks durchläuft.

Die Rechnereinheit übernimmt zweckmäßigerweise neben dem Vergleich der Bilddaten gleich die Bestimmung der interessierenden Messgrößen, wie Randbreite, Toleranz etc. mit.

Ein Computerprogramm mit Programmcode-Mitteln ist zweckmäßigerweise in der genannten Rechnereinheit des Inspektionssystems abarbeitbar, um das erfindungsgemäße Inspektionsverfahren auszuführen. Hierzu weist das Computerprogramm zweckmäßigerweise ein Bildverarbeitungsmodul, das die Unterschiede zwischen zwei optischen Bildern in für die vorliegende Waferinspektion optimaler Weise herausarbeitet, auf. Weiterhin weist das Computerprogramm Mittel, wie ein Mustererkennungsmodul, auf, um aus dem sich ergebenden Vergleichs- oder Differenzbild die interessierenden Daten zu extrahieren. Zu den extrahierenden Daten zählen im Falle der Randentlackungsinspektion die Breite des Randes, die durchschnittliche Abweichung hiervon (Toleranz) das Maß der Exzentrizität des entlackten Randes auf der kreisrunden Waferscheibe etc. Die ermittelten Daten können in geeigneter Form gespeichert werden, wobei es zweckmäßig sein kann, wenn beim Überschreiten einzuhaltender Toleranzen entsprechende Warnsignale oder Hinweise hierauf erfolgen.

Das Computerprogramm kann auf geeigneten Datenträgern, wie EEPROMs, Flash-Memories, aber auch CD-ROMs, Disketten oder Festplattenlaufwerken gespeichert sein. Auch das Herunterladen des Computerprogramms über interne oder öffentlich nutzbare Netze ist möglich und bekannt.

Im Folgenden soll die Erfindung anhand eines in den Figuren dargestellten Ausführungsbeispiels näher erläutert werden.
- Figur 1: zeigt eine räumliche Anordnung eines Systems zur Waferinspektion im Bereich des Waferrandes, insbesondere zur Inspektion der Randentlackung.
- Figur 2: zeigt schematisch zwei optische Bilder, wie sie z. B. mit einer Matrixkamera in einem System gemäß Figur 1 aufgenommen werden können (Fig. 2A und 2B) sowie ein Vergleichsbild (Fig. 2C).
- Figur 3: zeigt schematisch zwei optische Bilder 25 und 26, wie sie z.B. mit einer Zeilenkamera in einem System gemäß Figur 1 aufgenommen werden können, sowie ein Vergleichsbild 27.
- Figur 4: zeigt eine räumliche Anordnung eines Waferinspektionssystems mit zwei Beleuchtungseinrichtungen 13 und 14 zur Beobachtung im Hell- bzw. Dunkelfeld.
- Figur 5: zeigt eine leicht geänderte Ausführungsform des Systems aus Figur 4 mit einer anderen Art von Dunkelfeld-Beleuchtungseinrichtung 14.
- Figur 6: zeigt ein System gemäß Figur 5 in einer anderen Ansicht mit leicht geänderter Anordnung der Hellfeld-Beleuchtungseinrichtung 13.
- Figur 7: zeigt das System gemäß Figur 1 mit zwei Beleuchtungseinrichtungen 13 und 14 für Hell- bzw. Dunkelfeldbeobachtung.

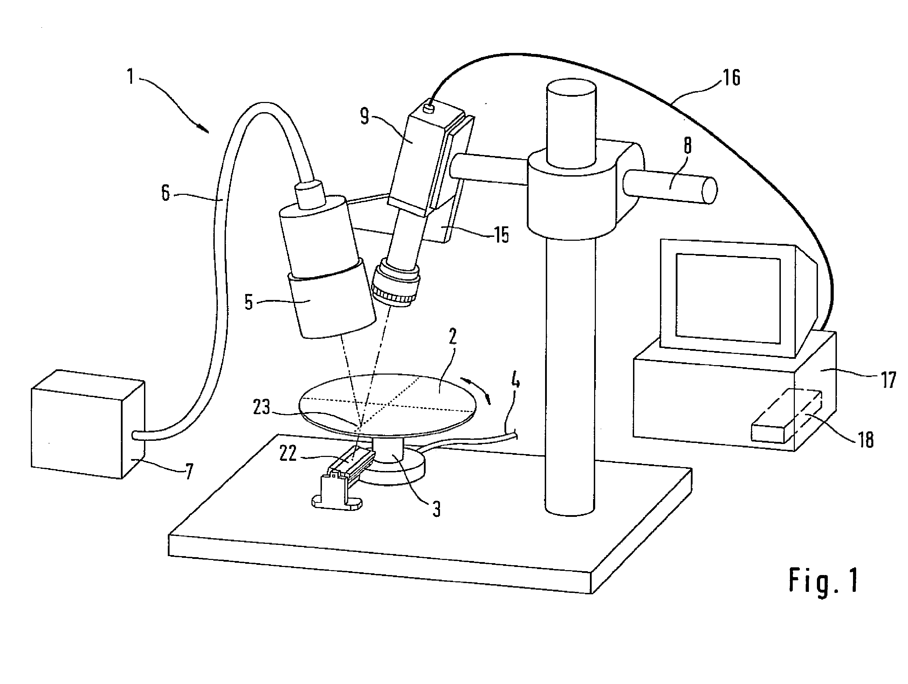

Figur 1 zeigt ein für die vorliegende Erfindung geeignetes System zur Waferinspektion, insbesondere zur Untersuchung der Randentlackung. Ein optischer Detektor 9, hier eine Abbildungseinrichtung in Form einer CCD-Zeilenkamera und eine Auflicht-Beleuchtungseinrichtung 5 sind auf einen zu inspizierenden Bereich des Wafers 2 im Bereich seines Waferrandes 23 gerichtet. Das Gesamtsystem zur Waferinspektion ist mit 1 bezeichnet. Zur Justierung des Wafers ist eine Waferrand-Positionserkennungseinrichtung 22 vorgesehen, wobei eine Justierung mittels Beleuchtung unterhalb des Wafers 2 vorgenommen wird. Die von der Abbildungseinrichtung 9 aufgenommenen Bilddaten werden über eine Datenleitung 16 auf eine Datenausleseeinrichtung 17 übertragen. Diese Datenausleseeinrichtung 17 ist oder enthält eine Rechnereinheit 18 zur Auswertung aufgenommener Bilder.

Mit dem dargestellten System 1 ist eine Auflichtbeleuchtung sowohl im Hell- als auch im Dunkelfeld möglich. Hierzu wird die Auflicht-Beleuchtungseinrichtung 5 auf den zu inspizierenden Bereich des Waferrandes 23 des Wafers 2 gerichtet. Licht gelangt über eine Lichtquelle 7 und ein Lichtleiterbündel 6 in die Beleuchtungseinrichtung 5, die gegenüber der Oberfläche des Wafers 2 geneigt angeordnet ist. An einem verschiebbaren Trageelement 8 ist mittels einer Tragschiene 15 die Abbildungseinrichtung 9 angeordnet. Die Achsen der Abbildungseinrichtung 9 und der Beleuchtungseinrichtung 5 sind gestrichelt gezeichnet und schneiden sich auf der Oberfläche des Waferrandes 23.

Soll eine Inspektion des Waferrandes im Hellfeld erfolgen, so wird die Beleuchtungseinrichtung 5 derart zur Abbildungseinrichtung 9 angeordnet, dass die gestrichelt gezeichneten Achsen der beiden Einrichtungen 9 und 5 mit der auf der Oberfläche des Wafers 2 senkrecht stehenden Wafernormalen im Schnittpunkt der beiden Achsen in einer gemeinsamen Ebene liegen.

Andererseits kann mit dem System 1 auch eine Beobachtung im Dunkelfeld erfolgen, indem die Beleuchtungseinrichtung 5 aus der oben erwähnten Ebene um einen Winkel herausgedreht wird, so dass die Achse der Beleuchtungseinrichtung 5 nicht mehr in der Ebene liegt, die durch die besagte Wafernormale und die Achse der Abbildungseinrichtung 9 aufgespannt wird.

Schließlich ist mit dem dargestellten System 1 auch eine kombinierte Hellfeld- und Dunkelfeldbeobachtung möglich, indem beispielsweise mit der Beleuchtungseinrichtung 5 eine Hellfeldbeobachtung erfolgt und eine oder mehrere zusätzliche Beleuchtungseinrichtungen zur zusätzlichen Dunkelfeldbeobachtung vorgesehen werden.

In dem dargestellten Inspektionssystem 1 liegt der Wafer 2 auf einer Aufnahme-Einrichtung 3 auf, die den Wafer 2 mittels Vakuumansaugung festhält. Das benötigte Vakuum wird der Aufnahmeeinrichtung 3 mittels einer Vakuumleitung 4 zugeführt.

Das hier in Figur 1 dargestellte System ist aus der bereits zitierten Druckschrift DE 102 32 781 A1 bekannt. Zur Möglichkeit insbesondere der Dunkelfeldbeobachtung mit dem dargestellten System sei ausdrücklich auf diese Druckschrift verwiesen.

Durch geeignete Wahl der Winkel der Achsen der Beleuchtungseinrichtung 5 und der Abbildungseinrichtung 9 zur Wafernormalen sowie eventuell durch Einstellung eines Dunkelfeldwinkels kann der Benutzer die Hellfeld- bzw. Dunkelfeldbeleuchtung an die zu inspizierende Eigenschaft anpassen, um die zu untersuchende Struktur optimal abbilden zu können.

Es sei darauf hingewiesen, dass mit dem System gemäß Figur 1 auch andere Beleuchtungs- und Abbildungsachsen realisierbar sind. Prinzipiell müssen die jeweiligen Achsen derart gewählt werden, dass sich zum Zwecke des erfindungsgemäßen Inspektionsverfahrens optimale Bildkontraste ergeben.

Es ist sinnvoll, das dargestellte System 1 in den Fertigungsprozess des Wafers 2 zu integrieren. Erfindungsgemäß durchläuft der Wafer 2 das Inspektionssystem 1 zwei Mal pro Prozessierungszyklus. Der eventuell vorprozessierte Wafer wird erstmals vor dem nächsten Prozessierungsschritt in das Inspektionssystem 1 eingebracht, wo ein optisches Bild - in diesem Ausführungsbeispiel des Waferrandes - aufgenommen wird. Anschließend erfolgt die übliche Prozessierung des Wafers durch Belacken der Waferscheibe, Härten des Lacks, Entfernen der Randwulst (EBR), in der Regel durch nasschemische Randentlackung (EBR) und je nach Fertigungsprozess danach durch optische Randentlackung (OEBR), anschließende Belichtung des Fotolacks im Stepper und schließlich Entwicklung der Fotoresistschicht zur Ausbildung des gewünschten Reliefs auf der Waferoberfläche. Es können sich weitere Schritte (Implantation, Aufdampfen von metallischen Schichten etc.) anschließen, wobei der Wafer die genannten Prozessierungsschritte in der Regel mehrfach durchläuft. Eine Untersuchung der Randentlackung erfolgt in jedem Zyklus erfindungsgemäß vor Aufbringung der Fotoresistschicht und nach der Randentlackung, also zweckmäßigerweise nach Entwicklung der Fotoresistschicht.

Der prozessierte Wafer wird demnach ein zweites Mal zweckmäßigerweise nach Entwicklung der Fotoresistschicht dem Inspektionssystem 1 zugeführt, um ein zweites optisches Bild des Waferrandes aufzunehmen. Wird die Waferscheibe unmittelbar danach wieder belackt, kann dieses aufgenommene Bild wieder als erstes Bild im nächsten Prozessierungszyklus dienen.

Die Bilddaten des ersten und des zweiten Bildes werden über die Datenleitung 16 der Datenauslese-Einrichtung 17 mit Rechnereinheit 18 zugeführt. Dort erfolgt mittels Bildverarbeitung ein Vergleich des ersten und des zweiten Bildes, wobei in diesem Ausführungsbeispiel die Breite der Randentlackung am Waferrand 23 möglichst exakt dargestellt werden soll. In einfachster Weise erfolgt der erfindungsgemäße Vergleich der Bilder durch Differenzbildung, wobei eine Wichtung der Bilddaten des ersten und des zweiten Bildes sinnvoll sein kann.

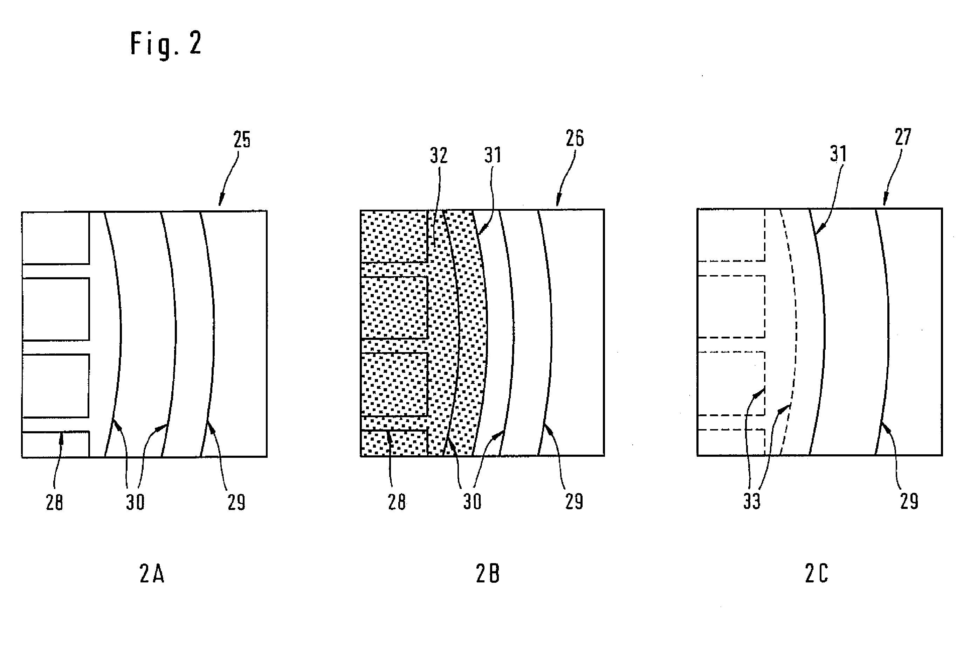

Figur 2 zeigt sehr schematisch ein erstes optisches Bild 25 und ein zweites optisches Bild 26, wie sie typischerweise beim Untersuchen der Randentlackung mit z. B. einer Matrixkamera in dem oben beschriebenen System 1 aufgenommen werden. Figur 2C zeigt ein Vergleichsbild 27, das die Unterschiede des ersten und des zweiten Bildes wiedergibt.

Das erste optische Bild 25 (Fig. 2A) zeigt Strukturen 28 von vorhergegangenen Prozessschritten auf der Waferoberfläche, Ränder 30 von vorherigen Prozessschritten sowie den Waferrand 29. Das zweite optische Bild 26 (Fig. 2B) zeigt das Bild des selben zu inspizierenden Bereichs nach dem Aufbringen einer Photoresistschicht und nach der Randentlackung (EBR). Der mit Resist bedeckte Bereich ist mit 32 gekennzeichnet, der Resistrand nach Randentlackung mit 31. Wie aus Figur 2B ersichtlich, weist dieses zweite optische Bild 26 Strukturen auf, die aus den vorangehenden Prozessschritten stammen, nämlich die Strukturen 28 und 30. Diese Strukturen erschweren die automatische Inspektion der Randentlackung und machen sie teilweise unmöglich. Es hat sich gezeigt, dass diese störenden Strukturen erfindungsgemäß dadurch beseitigt werden können, indem ein erstes Bild 25 des zu untersuchenden Bereichs vor dem Aufbringen der Fotoresistschicht aufgenommen wird, welches anschließend sozusagen vom zweiten optischen Bild 26 abgezogen wird. Wie aus Fig. 2C ersichtlich, treten im Vergleichsbild 27 die zu inspizierenden Strukturen deutlich zu Tage. Klar sichtbar ist der Resistrand 31 nach der zuletzt erfolgten Randentlackung, während die Strukturen aus vorherigen Prozessschritten, in Figur 2A mit 28 und 30 bezeichnet, deutlich zurücktreten. Die Bereiche, deren Erscheinungsbild durch den überlagerten Resist verändert wurden, sind in Figur 2C mit 33 bezeichnet. Das Vergleichsbild erlaubt eine genaue Vermessung der Randentlackung beispielsweise mittels einer Mustererkennung, durch die automatisch die Breite des entlackten Randes, Toleranzgrenzen und weitere interessierenden Größen abgeleitet werden können.

Die dargestellte Erfindung ermöglicht einen schnellen Durchsatz an untersuchten Wafern innerhalb ihres Fertigungsprozesses bei minimalem Platzbedarf. Anstelle der beschriebenen Abbildungseinrichtung 9 können auch x/y-Scans oder One-Shots (Aufnahme des gesamten Wafers) verwendet werden.

Die besten Ergebnisse sind zur Untersuchung der Randentlackung mit einer Auflicht-Hellfeldbeleuchtung erzielt worden, wobei die Verwendung von Farbbildern vorteilhaft ist. Hierzu wird entweder eine Farbkamera benötigt oder sequentiell mit verschiedenen Wellenlängen beleuchtet.

Als Strahlungsquellen bieten sich unter anderem Faserbeleuchtung, LEDs, Leuchtstofflampen, Halogenlampen, Metalldampflampen, Blitzlampen oder Laser an. Das Spektrum der Strahlung kann poly- oder monochromatisch sein. Auch der Spektralbereich kann in Abhängigkeit von der Empfindlichkeit der Abbildungseinrichtung 9 im visuellen, infraroten oder auch im UV-Bereich liegen. Als optischer Detektor 9 eignen sich Fotodioden, Zeilen- oder Matrixkameras, die ihrerseits als Monochrom- oder Farbkameras, etwa in Form von CCD- oder CMOS-Kameras, ausgestaltet sein können.

Um die Datenmengen in der Daten-Ausleseeinheit 17 optimal zu verwalten, kann es sich anbieten, nur die Ergebnisse der Inspektion zu speichern und die eigentlichen Bilddaten zu verwerfen. Sollten mit den vorhandenen Bildern keine Ergebnisse zu berechnen sein oder die einzuhaltenden Toleranzen überschritten werden, können zur visuellen Nachuntersuchung im Einzelfall die verschiedenen optischen Bilder gespeichert werden.

Im Folgenden sollen weitere Ausführungsbeispiele dargestellt werden, wobei angemerkt sei, dass die oben getroffenen Aussagen über die Art der zu verwendenden Strahlungsquellen, optischen Detektoren sowie der Beleuchtung auch für die nachfolgenden Ausführungsbeispiele Gültigkeit besitzen. Deshalb soll im Folgenden insbesondere auf die Unterschiede der nachfolgenden Ausführungsbeispiele zu den oben besprochenen eingegangen werden.

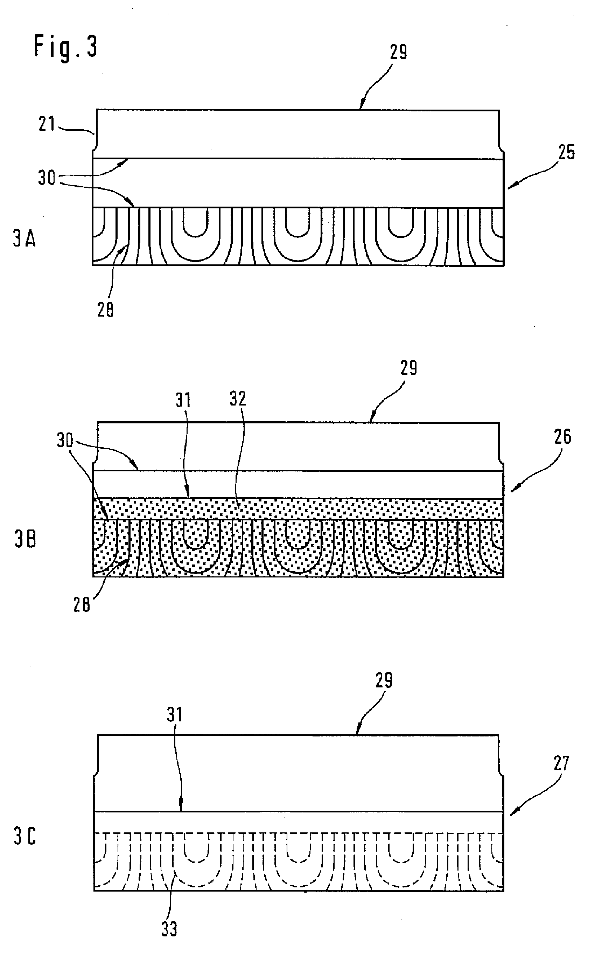

Figur 3 zeigt schematisch zwei optische Bilder, wie sie z.B. mit einer Zeilenkamera in einem System gemäß Figur 1 aufgenommen werden können (Figur 3A und 3B) sowie ein Vergleichsbild (Figur 3C).

Die optischen Bilder 25 und 26 können beispielsweise in einem wie Figur 1 dargestellten System aufgenommen werden, in dem die Waferscheibe 2 unter einer Zeilenkamera als optischer Detektor 9 rotiert, wobei die Abbildungsachse des optischen Detektors 9 vorzugsweise senkrecht auf die Waferscheibe 2 steht. Bei diesem Rotationsscan erhält man als Bild 25 eine Randabwicklung der in Figur 2A dargestellten Strukturen.

Das erste optische Bild 25 (Figur 3A) zeigt Strukturen 28 von vorhergegangenen Prozessschritten auf der Waferoberfläche sowie Ränder 30 von vorherigen Prozessschritten. Der Waferrand ist mit 29 bezeichnet. Die Randabwicklung beginnt hier bei einer als Notch oder Flat 21 bezeichneten Markierung, die zu Orientierungs- und Kalibrierungszwecken üblicherweise auf einer Waferscheibe aufgebracht ist.

Das zweite optische Bild 26 (Figur 3B) zeigt das Bild desselben zu inspizierenden Bereichs nach dem Aufbringen einer Fotoresistschicht und nach der Randentlackung (EBR). Der mit Resist bedeckte Bereich ist mit 32 gekennzeichnet. Nach der nasschemischen und/oder optischen Randentlackung ist in dem zu inspizierenden Bereich der Waferscheibe der Resistrand 31 vorhanden. Wie aus Figur 3B ersichtlich, weist das zweite optische Bild 26 Strukturen auf, die aus den vorangehenden Prozessschritten stammen, nämlich die Strukturen 28 und 30. Aufgrund dieser Strukturen war bisher die automatische Inspektion der Randentlackung anhand eines optischen Bildes 26 des zu inspizierenden Bereiches nahezu unmöglich. Erfindungsgemäß werden deshalb die Bilder 25 und 26 einem Vergleich unterzogen. Hierzu werden vorzugsweise Bildverarbeitungsprozeduren herangezogen. In beiden Bildern 25 und 26 gemeinsam vorkommende Strukturen sollen bei diesem Vergleich möglichst unterdrückt werden, während neu hinzugekommene Strukturen verstärkt werden sollen. Im einfachsten Fall kann der Vergleich durch Bildung einer Differenz der Bilder 26 und 25 erfolgen.

Ein erfindungsgemäßes Vergleichsbild 27 ist in Figur 3C dargestellt. Die Bereiche 33, deren Erscheinungsbild durch überlagerten Resist verändert wurden, sind abgeschwächt zu erkennen. Insbesondere sind die Ränder 30 von vorherigen Prozessschritten (nahezu) eliminiert und die Strukturen 28 von vorherigen Prozessschritten stark geschwächt. Deutlich zutage tritt der Resistrand 31 in Bezug auf den Waferrand 29. Selbstverständlich ist bei dem Erzeugen des Vergleichsbilds 27 darauf zu achten, dass der Waferrand 29 als Bezugslinie erhalten bleibt. Anhand des Vergleichsbildes 27 kann nun die Breite der Randentlackung genau vermessen werden. Insbesondere kann das genaue Vermessen der Randentlackung mittels eines Mustererkennungsverfahrens automatisiert werden.

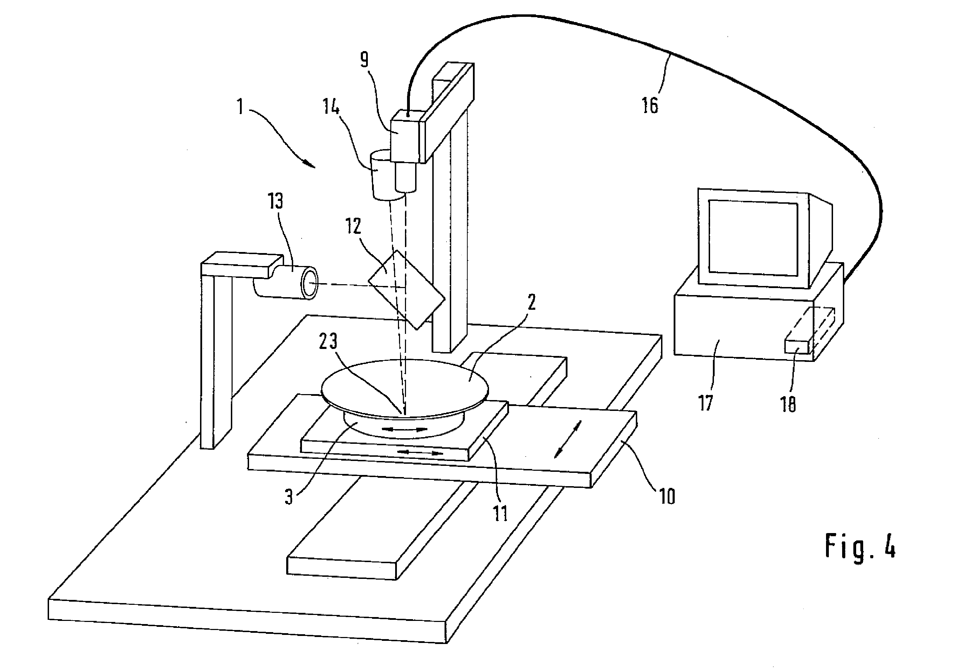

Weitere Alternativen zu dem in Figur 1 dargestellten Waferinspektionssystem sind in den Figuren 4 bis 7 dargestellt.

Figur 4 zeigt ein Waferinspektionssystem 1 mit einem ähnlichen Aufbau des Systems aus Figur 1. Gleiche Elemente sind mit den gleichen Bezugszeichen bezeichnet. Die Waferscheibe 2 wird von einer Aufnahmeeinrichtung 3 aufgenommen, die eine Rotation der Waferscheibe 2 um ihr Zentrum ermöglicht. Die Aufnahmeeinrichtung 3 ist mit einem x-Scantisch 11 und einem y-Scantisch 10 verbunden. Die Kombination rotierbarer Einrichtung 3 und Scantischen 10 und 11 ermöglicht zum einen eine Justierung des zu inspizierenden Bereichs 23 auf der Waferscheibe 2, zum anderen verschiedene Aufnahmemethoden, wie x-y- Scan, die bereits besprochene Randabwicklung (Rotationsscan), aber auch einen One-Shot des zu inspizierenden Bereichs 23 mit einer Matrixkamera.

Im Unterschied zum System aus Figur 1 ist eine Hellfeld-Beleuchtungseinrichtung 13 mit ihrer gestrichelt gezeichneten Achse parallel zur Oberfläche der Waferscheibe 2 angeordnet. Mittels eines Strahlteilers 12 (beispielsweise ein halbdurchlässiger Spiegel) wird das Licht der Hellfeld-Beleuchtungseinrichtung 13 senkrecht auf den zu inspizierenden Bereich 23 einfallend umgelenkt. Der optische Detektor 9 ist nunmehr mit seiner ebenfalls gestrichelt gezeichneten Abbildungsachse senkrecht über dem zu inspizierenden Bereich 23 angeordnet.

Zusätzlich zur Hellfeld-Beleuchtungseinrichtung 13, die an sich der in Figur 1 dargestellten Auflicht-Beleuchtungseinrichtung 5 entsprechen kann, ist in System 1 gemäß Figur 4 eine Dunkelfeld-Beleuchtungseinrichtung 14 vorgesehen. Auch diese Einrichtung kann prinzipiell wie die Auflicht-Beleuchtungseinrichtung 5 aus Figur 1 ausgestaltet sein. Zu beachten ist jedoch, dass die gestrichelt gezeichnete Achse der Dunkelfeld-Beleuchtungseinrichtung 14 nicht parallel zur Abbildungsachse des optischen Detektors 9 verläuft, sondern hierzu geneigt ist. Durch diese Neigung wird eine Beobachtung im Dunkelfeld sichergestellt, bei der nur an zu untersuchenden Strukturen im Bereich 23 der Waferscheibe 2 gebeugte oder gestreute Strahlung auf die Aufnahmefläche des optischen Detektors 9 fällt.

Mit dem in Figur 4 dargestellten Waferinspektionssystem 1 lässt sich sowohl im Hellfeld, im Dunkelfeld als auch im kombinierten Hell- und Dunkelfeld arbeiten, je nachdem welche der Hellfeld- und Dunkelfeld-Beleuchtungseinrichtungen 13 und 14 in Betrieb genommen werden. Zu den Vorteilen der unterschiedlichen Beobachtungsarten sei auf die obigen Ausführungen insbesondere im Zusammenhang mit dem System gemäß Figur 1 verwiesen.

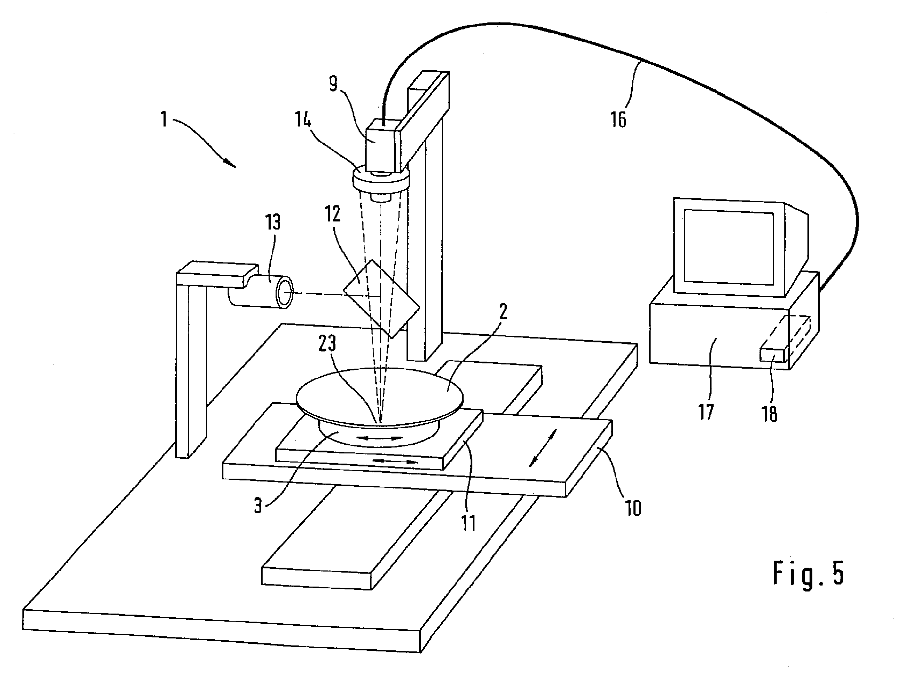

Figur 5 zeigt im wesentlichen das Waferinspektionssystem 1 aus Figur 4 bei veränderter Dunkelfeld-Beleuchtungseinrichtung 14. Im übrigen sind sämtliche Aussagen, wie sie bereits zum System 1 aus Figur 4 gemacht wurden, auch vorliegend gültig. Im Folgenden soll lediglich auf die unterschiedliche Ausgestaltung der Dunkelfeld-Beleuchtungseinrichtung 14 eingegangen werden.

Bei der Dunkelfeld-Beleuchtungseinrichtung 14 in Figur 5 handelt es sich beispielsweise um eine Lichtquelle mit vorgeschaltetem kollimierenden Linsensystem. Durch diese Anordnung ist sichergestellt, dass nur Strahlung aus dem gestrichelt eingezeichneten Kegel der Dunkelfeld-Beleuchtungseinrichtung 14 auf den zu inspizierenden Bereich 23 auf der Waferscheibe 2 trifft. Da der optische Detektor 9 im Zentrum der Beleuchtungseinrichtung 14 angeordnet ist, ist eine Beobachtung im Dunkelfeld sichergestellt. Wiederum kann zusätzlich eine Beobachtung im Hellfeld erfolgen, indem die Hellfeld-Beleuchtungseinrichtung 13 in Betrieb genommen wird.

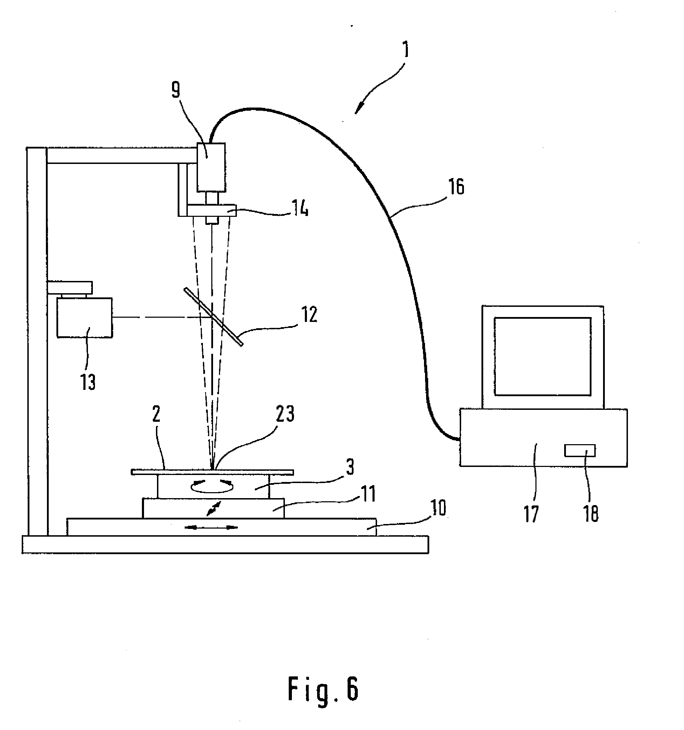

Figur 6 stellt das System 1 aus Figur 5 nochmals in einer anderen Ansicht (von der Seite) dar. Hierdurch ist der Strahlengang der Dunkelfeld-Beleuchtungseinrichtung 14, dargestellt durch den gestrichelt gezeichneten Kegel und die gestrichelt gezeichnete Abbildungsachse des optischen Detektors 9 gut erkennbar.

In dem System 1 gemäß Figur 6 ist die Hellfeld-Beleuchtungseinrichtung nicht eigens, sondern an der Befestigungseinrichtung für den optischen Detektor 9 sowie die Dunkelfeld-Beleuchtungseinrichtung 14 befestigt. Entsprechend ist die Position des Strahlteilers 12 angepasst.

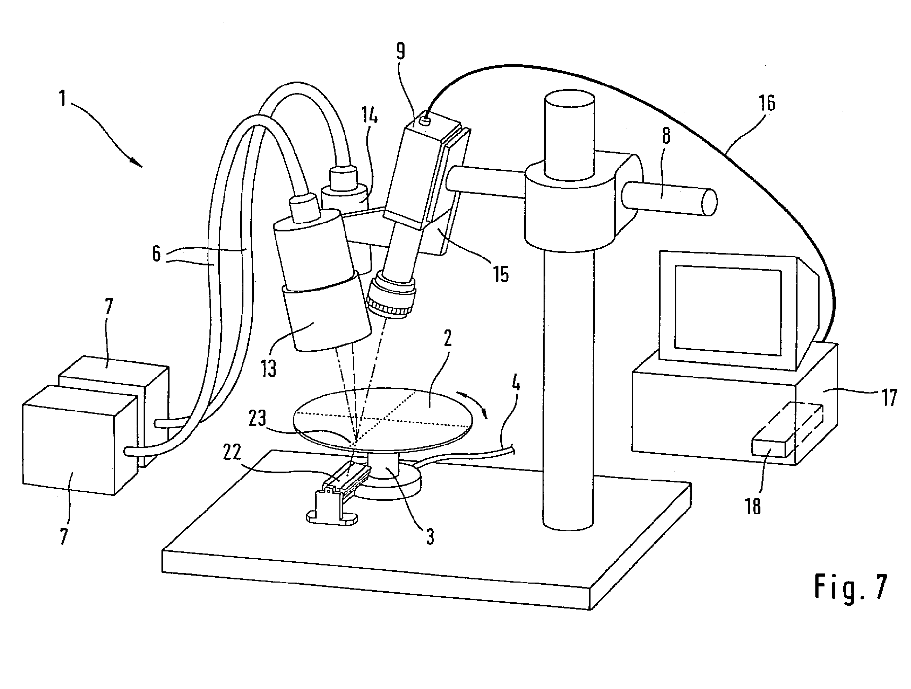

Schließlich zeigt Figur 7 eine weitere Ausgestaltung des Systems 1 gemäß Figur 1. Dargestellt ist hier eine Ausführungsform des Systems 1 aus Figur 1 mit einer zusätzlichen Dunkelfeld-Beleuchtungseinrichtung 14, die eine kombinierte Beobachtung im Hellfeld und Dunkelfeld ermöglicht. Hierzu wird die Auflicht-Beleuchtungseinrichtung 5 des Systems 1 aus Figur 1 hier als Hellfeld-Beleuchtungseinrichtung 13 eingesetzt. Prinzipiell kann es sich bei den Beleuchtungseinrichtungen 13 und 14 um dieselbe Art von Beleuchtungseinrichtungen (mit Lichtleiterbündel 6 und Lichtquelle 7) handeln, es kommen aber auch unterschiedliche Arten von Beleuchtungseinrichtungen in Frage. Bei einer kombinierten Hell- und Dunkelfeldbeobachtung liegen Wafernormale, die Beleuchtungsachse der Hellfeld-Beleuchtungseinrichtung 13 und die Abbildungsachse des optischen Detektors 9 in einer gemeinsamen Ebene, wobei die Beleuchtungsachse der Dunkelfeld-Beleuchtungseinrichtung 14 nicht in dieser Ebene liegt und derart ausgerichtet ist, dass sie diese Ebene im zu inspizierenden Bereich 23 auf der Waferscheibe 2 schneidet.

Wiederum sei zu den Vorteilen einer kombinierten Hell- und Dunkelfeldbeobachtung auf die obigen Ausführungen verwiesen. Welcher konkrete Aufbau gewählt wird, hängt in erster Linie von den zu untersuchenden Strukturen und der Qualität der erhaltenen Bilder sowie des Vergleichsbildes ab.

Es sei nochmals darauf hingewiesen, dass die Einzelkomponenten des in den Figuren 1 und 4 bis 7 gezeigten Systems, insbesondere die Beleuchtungseinrichtungen und die Waferaufnahmeeinrichtungen und Scanningtische, zu weiteren Systemkonfigurationen kombiniert werden können, ohne den Schutzbereich der Erfindung zu verlassen.

### Bezugszeichenliste

- 1: System zur Wafer-Inspektion
- 2: Wafer, Waferscheibe
- 3: Aufnahmeeinrichtung
- 4: Vakuumleitung
- 5: Auflicht- Beleuchtungseinrichtung
- 6: Lichtleiterbündel
- 7: Lichtquelle
- 8: Trageelement
- 9: optischer Detektor, Abbildungseinrichtung
- 10: y-Scantisch
- 11: x-Scantisch
- 12: Strahlteiler
- 13: Hellfeld-Beleuchtungseinrichtung
- 14: Dunkelfeld-Beleuchtungseinrichtung
- 15: Tragschiene
- 16: Datenleitung
- 17: Datenauslese-Einrichtung, Computer
- 18: Rechnereinheit
- 21: Notch, Flat
- 22: Waferrand-Positionserkennungseinrichtung
- 23: Randbereich, zu inspizierender Bereich des Wafers
- 25: erstes optisches Bild
- 26: zweites optisches Bild
- 27: Vergleichsbild
- 28: Strukturen von vorherigen Prozessschritten
- 29: Waferrand
- 30: Ränder von vorherigen Prozessschritten
- 31: Resistrand nach Randentlackung
- 32: mit Resist bedeckter Bereich
- 33: Bereiche, deren Erscheinungsbild durch überlagerten Resist verändert wurden

## Patentansprüche

1. Verfahren zur Inspektion eines Wafers (2), insbesondere zur Untersuchung der Randentlackung, wobei ein optisches Bild des zu inspizierenden Bereichs (23) aufgenommen wird,
**dadurch gekennzeichnet,**
**dass** ein erstes optisches Bild (25) vor dem Aufbringen einer Schicht auf die Waferscheibe (2) und ein zweites optisches Bild (26) nach dem zumindest teilweisen Entfernen dieser Schicht aufgenommen wird, und dass der abgebildete Bereich (23) der Waferoberfläche durch Vergleich des ersten und des zweiten Bildes inspiziert wird.

2. Verfahren nach Anspruch 1, **dadurch gekennzeichnet, dass** als aufzubringende und teilweise zu entfernende Schicht eine Fotoresistschicht und/oder eine Antireflexschicht verwendet wird.

3. Verfahren nach Anspruch 2, **dadurch gekennzeichnet, dass** die Fotoresistschicht zumindest im Randbereich (23) des Wafers (2) entfernt wird.

4. Verfahren nach einem der Ansprüche 1 bis 3, **dadurch gekennzeichnet, dass** das zweite optische Bild (26) nach dem Entwickeln der Fotoresistschicht aufgenommen wird.

5. Verfahren nach einem der Ansprüche 1 bis 4, **dadurch gekennzeichnet, dass** der Vergleich des ersten und zweiten optischen Bildes eine Differenzbildung dieser Bilder beinhaltet.

6. Verfahren nach einem der Ansprüche 1 bis 5, **dadurch gekennzeichnet, dass** die optischen Bilder (25, 26) im Hellfeld, im Dunkelfeld oder im kombinierten Hell- und Dunkelfeld aufgenommen werden.

7. Verfahren nach einem der Ansprüche 1 bis 6, **dadurch gekennzeichnet, dass** der zu inspizierende Bereich (23) von einem optischen Detektor (9) gescannt wird.

8. Verfahren nach einem der Ansprüche 1 bis 7, **dadurch gekennzeichnet, dass** eine polychrome oder aus mehreren Wellenlängen bestehende Beleuchtung eingesetzt wird.

9. Verfahren nach einem der Ansprüche 1 bis 7, **dadurch gekennzeichnet, dass** eine monochrome Beleuchtung eingesetzt wird.

10. Waferinspektionssystem zur Inspektion eines Wafers (2) insbesondere zur Untersuchung der Randentlackung, mit einem optischen Detektor (9) zur Aufnahme eines optischen Bildes des zu inspizierenden Bereichs (23) und mit einer Datenauslese-Einrichtung (17) zur Auslese der vom optischen Detektor (9) gelieferten Bilddaten,
**dadurch gekennzeichnet,**
**dass** eine mit der Datenauslese-Einrichtung (17) in Verbindung stehende Rechnereinheit (18) zum Vergleich von aufgenommenen Bildern des zu inspizierenden Bereichs (23) vorgesehen ist.
